# EUROPÄISCHE PATENTSCHRIFT

(11) **EP 1 226 050 B1**
(45) Veröffentlichungstag und Bekanntmachung des Hinweises auf die Patenterteilung: **21.07.2004**
(21) Anmeldenummer: 00978935.5
(22) Anmeldetag: 13.09.2000
(51) Int. Cl.: B60R 21/34, B62D 25/16

(54) **VORDERBAU FÜR EIN KRAFTFAHRZEUG**
FRONT STRUCTURE FOR A MOTOR VEHICLE
STRUCTURE AVANT POUR VEHICULE AUTOMOBILE

(30) Priorität: 19.10.1999 DE 19950294; 11.12.1999 DE 19959892
(43) Veröffentlichungstag der Anmeldung: 31.07.2002
(60) Teilanmeldung: 03010232.1
(73) Patentinhaber: Adam Opel AG, 65423 Rüsselsheim (DE)
(72) Erfinder: KERKELING, Christoph, 55118 Mainz (DE); KRETH, Laszlo, 64319 Pfungstadt (DE); RENNEISEN, Ingo, 65239 Hochheim (DE)
(86) Internationale Anmeldenummer: PCT/DE2000/003221
(87) Internationale Veröffentlichungsnummer: WO 2001/028821

(56) Entgegenhaltungen:
- EP-A- 0 853 032
- DE-A- 2 934 060
- DE-C- 4 401 023
- PATENT ABSTRACTS OF JAPAN vol. 1995, no. 02, 31. März 1995 (1995-03-31) & JP 06 321136 A (TOYOTA MOTOR CORP), 22. November 1994 (1994-11-22)
- PATENT ABSTRACTS OF JAPAN vol. 1995, no. 03, 28. April 1995 (1995-04-28) & JP 06 336179 A (MITSUBISHI MOTORS CORP), 6. Dezember 1994 (1994-12-06)
- PATENT ABSTRACTS OF JAPAN vol. 2000, no. 07, 29. September 2000 (2000-09-29) & JP 2000 108841 A (MAZDA MOTOR CORP), 18. April 2000 (2000-04-18)

## Beschreibung

### Technisches Gebiet

Die Erfindung bezieht sich auf den Vorderbau eines Fahrzeuges. Dessen Gestaltung unterliegt vielen unterschiedlichen Erfordernissen. Ein Gesichtspunkt ist u. a. der Schutz von Fußgängern bei Unfällen. Neue Forderungen des Gesetzgebers stellen insbesondere die Reduzierung der auf den Kopf der angefahrenen Person wirkenden Kräfte in den Vordergrund. Der Vorderbau soll so gestaltet sein, dass deren Wirkungen möglichst kein sind, also schwere Kopfverletzungen vermieden werden.

### Stand der Technik

Mit dieser Problematik beschäftigt sich auch die DE 29 34 060 A1. Hier wird vorgeschlagen, die Fronthaube und die diese umrahmenden Karosserieteile (Kotflügel) über bleibend verformbare Deformationsglieder an den Versteifungsteilen des Fahrzeugaufbaus abzustützen. Die konkrete Ausführung des Vorschlages besteht aus einem halbkreisförmig gebogenen Blech zwischen der inneren Kante der Außenhaut des Kotflügels und einem darunter liegenden Versteifungsteil. Dasselbe gilt für die dem Kotflügel gegenüberliegende Kante der Fronthaube. Schlägt bei einem Unfall der Kopf des Fußgängers in diesem Bereich auf, nehmen die Deformationsglieder die Stoßenergie auf, wodurch der Kopfaufprall relativ weich erfolgen soll.

Diese Überlegung wird in der DE 44 01 023 C1. aufgegriffen. Die Anbindung der Außenhaut des Kotflügels an das Versteifungsteil erfolgt mittels eines sogenannten Anbindungssteges, der auf einem steifen Auflagesattel des Randeinbaues aufliegt und beim Aufprall an diesem abrollt. Außerdem werden zwischen dem Anbindungssteg und dem Auflagesattel nachgiebige Befestigungswinkel angeordnet. Auf diese Weise soll ebenfalls erreicht werden, dass die Kräfte, die auf den aufschlagenden Kopf eines Fußgängers wirken, klein bleiben.

Bei dieser Ausführung besteht der Nachteil, dass die Kotflügel heutiger Kraftfahrzeuge meist einen sehr schmalen oberen Bereich aufweisen. Daher wird bei einem Aufprall des Kopfes des Fußgängers meist anstelle des Kotflügels der diesem nahe Bereich der Haube getroffen. Die Haube gibt bei hohen Belastungen nach, während eine an die Haube angrenzende Kante des Kotflügels stehen bleibt und Ursache für Kopfverletzungen sein kann.

In der DE 89 10 122 U1 wird das Seitenteil eines Fahrzeuges bestehend aus einem Radhaus und einem Kotflügel beschrieben. Radhaus und Kotflügel bestehen aus Kunststoff und sind an ihren Außenkanten miteinander verbunden, wobei der Kotflügel sich über das Radhaus zur Fronthaube erstreckt.

Der Stand der Technik gemäß der JP 06321136 kommt der vorliegenden Erfindung sehr nahe und bildet daher den Oberbegriff des Anspruches 1. In der JP 06321136 ist ein Kotflügel dargestellt, der sich bei Belastung nach außen und/oder nach unten bewegt. Dazu besitzt er eine nach oben ragende Erweiterung (siehe Bezugszeichen 22) mit der Höhe H, gegen die der auf den Vorderbau aufschlagende Kopf eines Fußgängers drückt, wodurch der Kopf von der der Motorhaube gegenüberliegenden Kotflügelkante ferngehalten wird. Dafür schlägt der Kopf aber auf die Erweiterung auf, die zwar weicher als die Kotflügelkante gestaltet werden kann, aber trotz allem ebenfalls Kopfverletzungen hervorrufen kann. Hinzu kommt, dass eine solche Erweiterung schwer zu realisieren ist und sich kaum in optisch ansprechender Weise in die Fahrzeugkontur integrieren lässt.

### Das zu lösende Problem

Um die Verletzungsgefahr für von einem Fahrzeug angefahrene Fußgänger zu verringern, wird man fordern müssen, dass die Kräfte beim Aufschlag auf die Fronthaube nicht zu groß werden. Man kann dies erreichen, indem diese nachgiebig gestaltet und zwischen ihr und den Aggregaten im Motorraum bzw. weiteren Karosserieteilen ausreichend Platz gelassen wird, so dass bei einem aufschlagbedingten Eindrücken der Fronthaube die unter der Fronthaube liegenden Aggregate keine Hindernisse darstellen. Kritisch sind allerdings Kopfaufschläge im Übergang zwischen Fronthaube und Kotflügel. Die Außenhaut des Kotflügels wird im Allgemeinen nämlich so an die Karosserie angebunden, dass der Innenrand der Außenhaut nach innen abgeknickt und mit einer unter der Motorhaube verlaufenden Strebe verbunden ist. Die dabei entstehende Kante liegt dem Rand der Motorhaube gegenüber und stellt eine nicht nachgiebige versteifungsstelle dar, von der ein erhebliches Gefährdungspotenzial ausgeht. Die bisher bekannten Lösungen im Stand der Technik sehen daher vor, den nach unten abgeknickten Teil des Kotflügels als Deformationselement auszubilden. Da es bei dieser Lösung bei einer versteiften Kante bleibt, können verletzungswirksame Kraftspitzen nicht ausgeschlossen werden.

Die Erfindung beruht damit auf der Aufgabe, den Vorderbau des Fahrzeuges, insbesondere den Übergang zwischen Kotflügel und Motorhaube so zu gestalten, dass von diesem Bereich nur ein geringes Gefährdungspotenzial für Fußgänger in einer Fahrzeug-Fußgängerkollision ausgeht.

Dieses Problem wird erfindungsgemäß durch folgende die Merkmale des Anspruchs 1 gelöst.

Durch diese Gestaltung des erfindungsgemäßen Vorderbaus wird bei einem Aufprall auf die Haube in deren seitlicher Randbereich ein direkter Kontakt mit der Kante des Kotflügels vermieden. Die den oberen Bereich des Kotflügels begrenzende Kante bewegt sich dabei von dem Fußgänger weg. Hierdurch wird ein Verletzungsrisiko des Fußgängers beim Aufprall seines Kopfes auf die Haube deutlich verringert.

Die Verbindung des Kotflügels mit dem Karosserieteil hat gemäß der Erfindung eine sehr hohe Festigkeit, ohne dass Verletzungen des Fußgängers durch die Kante des Kotflügels zu befürchten sind, weil die Verbindung zwischen dem Kotflügel und dem Karosserieteil eine vertikale Erstreckung aufweist und um eine horizontal verlaufende, nahe dem Karosserieteil und/oder dem Kotflügel angeordnete, in Fahrtrichtung weisende Achse schwenkbar ist. Hierbei kann nämlich beim Niederdrücken der Haube die Kante des Kotflügels seitlich weggeschwenkt werden.

Die Übertragung der vertikalen Bewegung der Haube beim Niederdrücken auf den Kotflügel gestaltet sich gemäß der Erfindung konstruktiv besonders einfach, weil die Verbindung des oberen Bereichs des Kotflügels mit dem Karosserieteil eine schräg unter einen seitlichen Rand der Haube geführte Rampe aufweist. Beim Niederdrücken der Haube gelangt hierdurch ihr Rand gegen die Rampe.

Beim Niederdrücken der Haube könnte der Rand der Haube die Rampe der Verbindung des Kotflügels mit dem Karosserieteil beispielsweise nach unten drücken und dabei die Kante des Kotflügels mitziehen. Die Kante des Kotflügels wird jedoch besonders weit aus dem Gefahrenbereich des Fußgängers wegschwenken, weil der Rand der Haube beim Niederdrücken zum Entlanggleiten an der Rampe gestaltet ist.

Eine zuverlässige Kopplung der Bewegung der Haube beim Niederdrücken auf den Kotflügel lässt sich einfach erreichen, wenn der der Rampe gegenüberstehende Rand von der Haube abgewinkelt und dessen freies Ende im Wesentlichen in Richtung der Rampe ausgerichtet ist.

Die Rampe könnte sich über die gesamte Höhe der Verbindung des Kotflügels mit dem Karosserieteil erstrecken. Dies kann jedoch bei einer vorgesehenen Steilheit der Rampe zu sehr großen Abmessungen der Verbindung führen. Die Abmessungen der Verbindung zwischen dem Karosserieteil und dem Kotflügel lassen sich bei einer beliebigen Steilheit der Rampe gemäß einer anderen vorteilhaften Weiterbildung der Erfindung besonders gering halten, wenn ein sich an dem Karosserieteil anschließender Abschnitt der Verbindung des oberen Bereichs des Kotflügels mit dem Karosserieteil im Wesentlichen vertikal geführt ist und wenn sich die Rampe unmittelbar an dem Abschnitt anschließt. Hierdurch befindet sich der Angriffspunkt der Verbindung an dem Karosserieteil zudem sehr weit außen, so dass die Kante des Kotflügels beim Niederdrücken der Haube besonders schnell seitlich von dem Fußgänger weggeschwenkt wird.

Zur weiteren Verringerung der Abmessungen der Verbindung zwischen dem Kotflügel und dem Karosserieteil trägt es bei, wenn zwischen der Rampe und dem oberen Bereich des Kotflügels ein weiterer, im Wesentlichen vertikal geführter Abschnitt angeordnet ist.

Zur weiteren Verringerung des Verletzungsrisikos des Fußgängers trägt es gemäß einer anderen vorteilhaften Weiterbildung der Erfindung bei, wenn die Haube in vertikaler Richtung bei einer vorgesehenen Belastung nachgiebig gestaltet ist.

Der Kotflügel lässt sich gemäß einer anderen vorteilhaften Weiterbildung der Erfindung mit besonders geringem Kraftaufwand von der Haube weg bewegen, wenn eine Verbindung des oberen Bereichs des Kotflügels mit dem Karosserieteil eine im Vergleich zu dem Kotflügel geringere Festigkeit in der quer zur vorgesehenen Fahrtrichtung weisenden Richtung aufweist.

Die Verbindung des oberen Bereichs des Kotflügels mit.dem Karosserieteil könnte beispielsweise durch eine entsprechende Formgebung quer zur vorgesehenen Fahrtrichtung nachgiebig gestaltet sein. Die vorgesehene Festigkeit der Verbindung lässt sich jedoch gemäß einer anderen vorteilhaften Weiterbildung der Erfindung einfach einstellen, wenn die Verbindung des Kotflügel mit dem Karosserieteil ein an den angrenzenden Bauteilen befestigtes Teil aus Blech oder einem anderen Werkstoff, z. B. Kunststoff ist. Das Teil kann hierdurch aus einer von dem Kotflügel abweichenden Materialstärke gefertigt werden und eine nahezu beliebige Form aufweisen. Es kann außerdem einteilig mit dem Kotflügel ausgeführt werden.

Die folgende Erläuterung einer weiteren Erfindung dient zur Verdeutlichung des zu lösenden Problems. Diese Erfindung ist aber nicht Gegenstand des Patentes.

Zur Lösung des Problems wird außerdem vorgeschlagen, den Vorderbau eines Fahrzeuges, insbesondere eines Personenkraftwagens mit einer einen Motorraum nach oben abschließenden, im Wesentlichen horizontal verlaufenden Fronthaube und mit zwei dem Motorraum seitlich begrenzenden Seitenwänden, die jeweils mit einem Kotflügel versehen sind, der nach innen gebogen ist, wobei der innere Abschnitt bündig unter Bildung einer Fuge in die Fronthaube übergeht, wie folgt zu gestalten: Der Vorderbau ist mit einer unterhalb der Fuge angeordneten und in Abstand zu dieser verlaufenden Strebe versehen, von der nach oben eine Halterung absteht, die den Kotflügel im Abstand zu seiner inneren Kante unterstützt, so dass der innere Abschnitt des Kotflügels frei in Richtung auf die Fronthaube über diese Abstützung hinausragt.

Bei einem Kopfaufprall auf den Fugenbereich kann der frei abstehende Abschnitt des Kotflügels leicht nachgeben, da er in keiner Weise abgestützt ist. Er wird lediglich an der Stelle abknicken, an der der Halter für den Kotflügel ansetzt.

Um auch die Verletzungsgefahr bei Aufschlägen zu minimieren, die weiter außen am Kotflügel erfolgen, wird vorgeschlagen, dass der Halter an einer Stelle ansetzt, an dem der Kotflügel schräg nach unten verläuft, so dass die auf den Halter wirkende Aufschlagkomponente klein ist.

Des Weiteren wird vorgeschlagen, den Kotflügel aus Kunststoff zu fertigen. Dies hat den Vorteil, dass der Widerstand gegen Verformungen bei unfallbedingten Aufschlägen klein ist. Außerdem kann ein Kunststoff gewählt werden, der sich reversibel verhält, also nach einer Eindrückung seine ursprüngliche Form wieder einnimmt, so dass für den Fall, dass sich eine Person in diesem Bereich am Fahrzeug abstützt, keine bleibenden Verformungen verbleiben.

Ausführungsbeispiele

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: einen rechten Teilbereich eines erfindungsgemäßen Vorderbaus eines Kraftfahrzeuges im Querschnitt,
- Fig. 2: eine vergrößerte Darstellung des seitlichen Bereichs des Vorderbaus aus Figur 1 im Normalzustand,
- Fig. 3: den Vorderbau aus Figur 2 nach einer Bewegung der Haube nach unten,
- Fig. 4: einen Querschnitt durch eine Seitenwand eines Fahrzeuges.

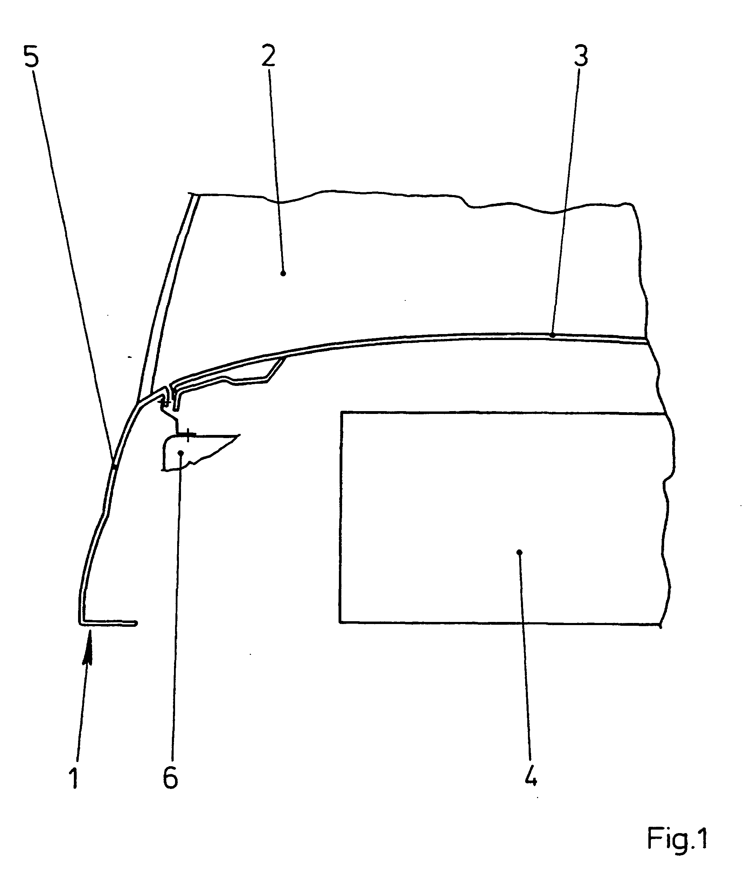

Figur 1 zeigt einen rechten Teilbereich eines Vorderbaus 1 eines Kraftfahrzeuges im Querschnitt und eine sich an den Vorderbau 1 anschließende Frontscheibe 2. Der Vorderbau 1 hat eine schwenkbar gelagerte Haube 3, welche in ihrer eingezeichneten Lage eine schematisch dargestellte Brennkraftmaschine 4 des Kraftfahrzeuges überdeckt. Seitlich wird der Vorderbau 1 von einem Kotflügel 5 begrenzt. Der Kotflügel 5 ist an einem ebenfalls schematisch dargestellten Karosserieteil 6 befestigt.

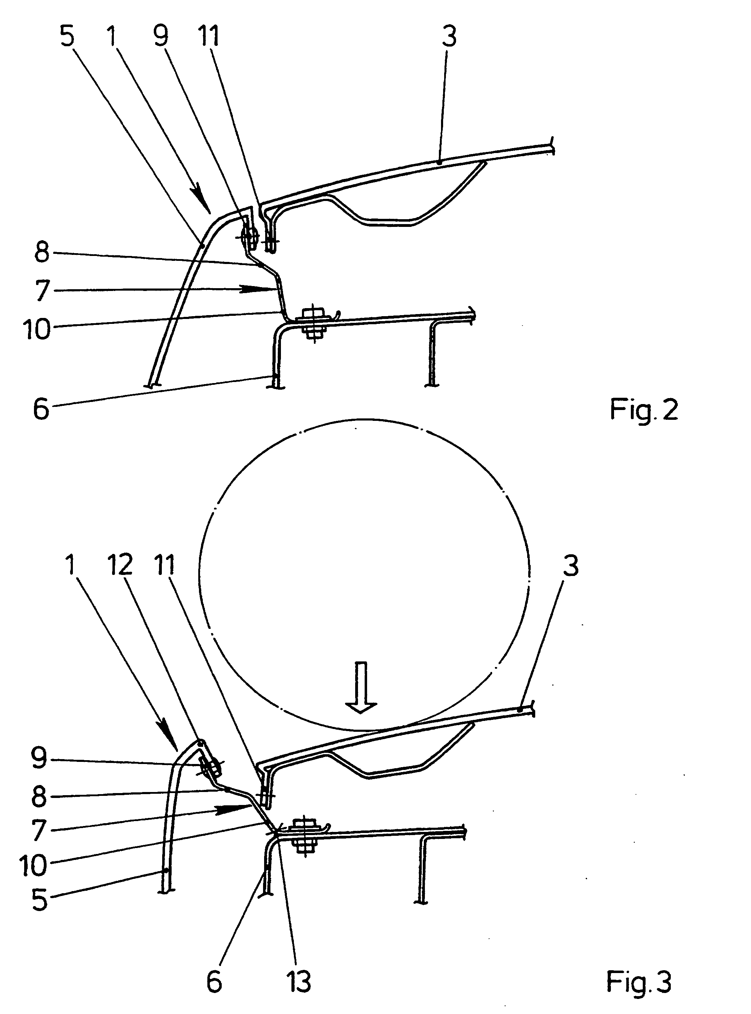

Figur 2 zeigt stark vergrößert den äußeren seitlichen Bereich des Vorderbaus 1 aus Figur 1. Hierbei ist zu erkennen, dass zwischen dem Kotflügel 5 und dem Karosserieteil 6 ein Blechteil 7 angeordnet ist. Das Blechteil 7 weist eine Rampe 8 auf und ist im Vergleich zu dem Kotflügel 5 besonders dünnwandig gestaltet. An den vertikalen Enden der Rampe 8 schließen sich jeweils vertikale Abschnitte 9, 10 an. Die Haube 3 hat an ihrem äußeren seitlichen Bereich einen abgewinkelten, gegen die Rampe 8 weisenden Rand 11.

Bei einem Unfall des Kraftfahrzeuges mit einem Fußgänger besteht häufig die Gefahr, dass dieser mit dem Kopf auf die Haube 3 aufprallt. Diese ist um ein vorgesehenes Maß nachgiebig gestaltet. Hierdurch gelangt das Ende des Randes 11 der Haube 3 gegen die Rampe 8 des Blechteils 7 und gleitet an dieser entlang. Dabei verschwenkt das Blechteil 7 um eine horizontal an dem Karosserieteil 6 angeordnete, senkrecht zur Zeichenebene verlaufende Achse 13.

Dieser Zustand ist in Figur 3 dargestellt. Der obere Bereich des Kotflügels 5 wird dabei seitlich nach außen und geringfügig nach unten hin weggedrückt. Hierdurch wird eine zu der Haube 3 weisende Kante 12 des Kotflügels 5 von dem Bereich des Kraftfahrzeuges, in dem der Kopf des Fußgänger gegen die Haube 3 gelangt ist, herausbewegt. Zur Verdeutlichung ist in der Zeichnung der Kopf des Fußgängers als strichpunktierter Kreis dargestellt und dessen Bewegungsrichtung auf die Haube 3 mit einem Doppelpfeil gekennzeichnet.

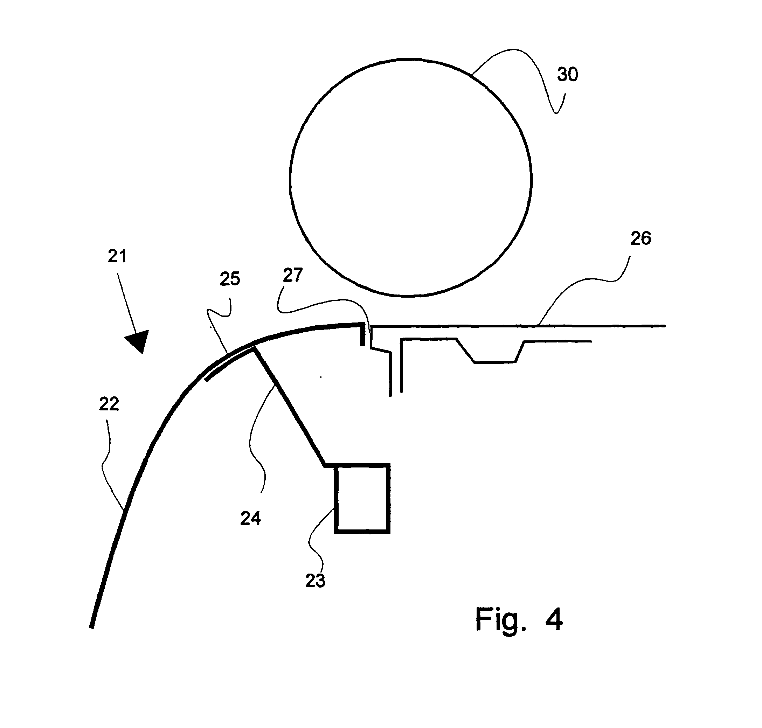

Um die der Erfindung zugrunde liegende Problematik zu verdentlichen, wird eine weitere Lösung in Figur 4 gezeigt. Sie ist jedoch kein Ausführungsbeispeil der Erfindung. Die Seitenwand 21 besteht aus einem Kotflügel 22, der die Außenhaut des Seitenteils bildet. Gehalten wird dieser Kotflügel an einer in Längsrichtung verlaufenden Strebe 23, an der über einen oder mehrere Halter 24 der Kotflügel 22 befestigt ist. Bei den Haltern 24 kann es sich auch um ein durchgehendes Blech handeln, das garallel zur Strebe verläuft.

Der Kotflügel 22 verläuft im Querschnitt betrachtet in einem aufsteigenden Bogen nach innen und geht dort bündig unter Bildung einer Fuge 27 in eine Fronthaube 26 über. Der Kotflügel 22 bildet damit einen seitlichen Rahmen für die Fronthaube 26.

Wie man der Darstellung entnehmen kann, steht das innere Ende des Kotflügels 22, das der Fronthaube 26 benachbart ist, frei über die Abstützstelle 25 des Halters 24 am Kotflügel 22 hinaus und kann daher frei nach unten gedrückt werden. Außerdem kann man der Darstellung entnehmen, dass die Strebe 23 unterhalb der Fuge 27 verläuft und einen ausreichend großen Abstand zur Fronthaube 26 einhält. Damit wird erreicht, dass diese bei einem Aufschlag frei nachgeben kann, ohne dass sich ihr Hindernisse in den Weg stellen, die zu einer Erhöhung der Krafteinwirkung auf den aufschlagenden Kopf führen würden.

Oberhalb der Fronthaube 26 ist ein Prüfkörper 30 schematisch angedeutet. Er symbolisiert einerseits den Kopf eines Fußgängers und andererseits ein Simulationselement, mit dem in entsprechenden Versuchen die Parameter bestimmt werden, die für einen Kopfaufprall typisch sind und es erlauben, den Vorderbau eines Fahrzeuges hinsichtlich des Gefahrenpotenzials für Fußgänger einzuordnen und zu bewerten.

Die entsprechenden Prüfvorschriften sehen vor, dass entlang bestimmter Linien genormte Prüfkörper aufgeschlagen werden, um die oben erwähnten Parameter zu bestimmen.

Die Darstellung zeigt den Prüfkörper 30 an einer Stelle, die gemäß den Prüfvorschriften als weit außen liegend bezeichnet werden kann. Man erkennt, dass bei einer Eindrückung der Fronthaube 26 durch den Prüfkörper 30 dieser Kontakt mit dem Kotflügel 22 erhält und dessen über den Halter 24 überstehenden Bereich nach unten drückt. Da der Kotflügel aus Kunststoff hergestellt ist, werden nur geringe zusätzliche Kräfte auf den Prüfkörper 30 bzw. aufschlagenden Kopf ausgeübt.

## Patentansprüche

1. Vorderbau für ein Kraftfahrzeug mit in der vorgesehenen Fahrtrichtung gesehen vorderen Kotflügeln (5), mit einem Karosserieteil (6) zur Halterung der Kotflügel (5) und mit einer zwischen den Kotflügeln angeordneten Haube (3), wobei
zumindest der obere Bereich der Kotflügel (5) bei einem Niederdrücken der Haube (3) in eine seitliche, von der Haube (3) wegweisende Richtung und/oder nach unten hin bewegbar gehalten ist,
und eine Verbindung zwischen dem Kotflügel (5) und dem Karosserieteil (6) eine vertikale Erstreckung aufweist und um eine horizontal verlaufende, nahe dem Karosserieteil (6) und/oder dem Kotflügel (5) angeordnete, in Fahrtrichtung weisende Achse (13) schwenkbar ist,
und die Verbindung eine schräg unter einen seitlichen Rand (11) der Haube (3) geführte Rampe (8) aufweist,
**dadurch gekennzeichnet, dass** der der Rampe (8) in vertikaler Richtung gegenüberstehende Rand (11) von der Haube (3) nach unten abgewinkelt und dessen freies Ende gegen die Rampe (8) gerichtet ist, so dass beim Niederdrücken des Randes der Haube (3) in Folge eines Kopfaufschlages auf den an den Kotflügel anschließenden Bereich der Haube (3) das Ende des Randes (11) der Haube (3) gegen die Rampe (8) gelangt und an dieser entlang gleitet, wodurch die Verbindung um die Achse (13) nach außen verschwenkt und somit der obere Bereich des Kotflügels (5) seitlich nach außen und damit aus dem Kopfaufschlagbereich herausbewegt wird.

2. Vorderbau nach Anspruch 1, **dadurch gekennzeichnet, dass** ein sich an dem Karosserieteil (6) anschließender Abschnitt (10) der Verbindung des oberen Bereichs des Kotflügels (5) mit dem Karosserieteil (6) im Wesentlichen vertikal geführt ist und dass sich die Rampe (8) unmittelbar an dem Abschnitt (10) anschließt.

3. Vorderbau nach einem der vorhergehenden Ansprüche, **dadurch gekennzeichnet, dass** die Haube (3) in vertikaler Richtung bei einer vorgesehenen Belastung nachgiebig gestaltet ist.

4. Vorderbau nach einem der vorhergehenden Ansprüche, **dadurch gekennzeichnet, dass** die Verbindung des oberen Bereichs des Kotflügels (5) mit dem Karosserieteil (6) eine im Vergleich zu dem Kotflügel (5) geringere Festigkeit in der quer zur vorgesehenen Fahrtrichtung weisenden Richtung ist.

5. Vorderbau nach einem der vorhergehenden Ansprüche, **dadurch gekennzeichnet, dass** die Verbindung des Kotflügels (5) mit dem Karosserieteil (6) ein an den angrenzenden Bauteilen befestigtes Blechteil (7) aufweist.

## Claims

1. Front part of a motor vehicle, with front wings (5) as seen in the planned direction of travel, with a body portion (6) for supporting the wings (5) and with a bonnet (3) arranged between the wings, wherein
when the bonnet (3) is pushed down, at least the upper region of the wings (5) is kept movable in a lateral direction pointing away from the bonnet (3) and/or downwardly,
and a connection between the wing (5) and the body portion (6) has a vertical extent and is pivotable about a horizontally extending axis (13) arranged close to the body portion (6) and/or the wing (5) and pointing in the direction of travel,
and the connection has a ramp (8) passing obliquely under a side edge (11) of the bonnet (3),
**characterised in that** the edge (11) which is opposite the ramp (8) in a vertical direction is angled downwardly from the bonnet (3) and its free end is directed towards the ramp (8) so that, when the edge of the bonnet (3) is pushed down owing to a head hitting the region of the bonnet (3) adjoining the wing, the end of the edge (11) of the bonnet (3) passes towards the ramp (8) and slides along it, as a result of which the connection is pivoted outwardly about the axis (13) and hence the upper region of the wing (5) is moved laterally outwards and so out of the region hit by the head.

2. Front part according to claim 1, **characterised in that** a section (10) of the connection of the upper region of the wing (5) to the body portion (6) extends substantially vertically, which section (10) adjoins the body portion (6), and **in that** the ramp (8) directly adjoins the section (10).

3. Front part according to any of the preceding claims, **characterised in that** the bonnet (3) is designed to be flexible in a vertical direction under a rated load.

4. Front part according to any of the preceding claims, **characterised in that** the connection of the upper region of the wing (5) to the body portion (6) has a lower strength in the direction pointing transversely to the planned direction of travel, compared with the wing (5).

5. Front part according to any of the preceding claims, **characterised in that** the connection of the wing (5) to the body portion (6) has a sheet metal portion (7) attached to the adjoining structural members.

## Revendications

1. Structure avant pour un véhicule automobile, comprenant dans la direction de marche prévue du véhicule, des ailes avant (5), avec une pièce de carrosserie (6) pour retenir l'aile (5) et avec un capot (3) disposé entre les ailes, dans laquelle structure,
en cas de pressage du capot (3) vers le bas, au moins la zone supérieure de l'aile (5) est retenue dans une direction s'écartant du capot (3) et/ou de façon mobile vers le bas,
et une liaison entre l'aile (5) et la pièce de carrosserie (6) présente une extension verticale et est susceptible de pivoter autour d'un axe (13) courant horizontalement, disposé à proximité de la pièce de carrosserie (6) et/ou de l'aile (5), orienté dans la direction de déplacement,
et dans laquelle structure la liaison présente une rampe guidée (8), inclinée sous un bord latéral (11) du capot (3),
**caractérisée en ce que** la rampe (8) est pliée vers le bas dans la direction verticale en face du bord (11) du capot (3) dont l'extrémité libre est dirigée contre la rampe (8), de sorte qu'en cas de pressage sur le bord du capot (3) à la suite d'un choc avec la tête d'un piéton sur la zone du capot (3) se raccordant à l'aile, l'extrémité du bord (11) du capot (3) parvienne contre la rampe (8) et glisse le long de celle-ci, de sorte que la liaison autour de l'axe (13) pivote vers l'extérieur et déplace ainsi la zone supérieure de l'aile (5) latéralement vers l'extérieur et donc hors de la zone du choc avec la tête d'un piéton.

2. Structure avant selon la revendication 1, **caractérisée en ce qu'**un segment (10) de la liaison de la zone supérieure de l'aile (5) avec la pièce de carrosserie (6) se raccordant à cette dernière, est guidé de façon sensiblement verticale, et **en ce que** la rampe (8) se raccorde directement au segment (10).

3. Structure selon l'une des revendications précédentes, **caractérisée en ce que** le capot (3) présente une configuration telle, en direction verticale, qu'elle soit déformable pour une charge prévue.

4. Structure avant selon l'une des revendications précédentes, **caractérisée en ce que** la liaison de la zone supérieure de l'aile (5) avec la partie (6) de carrosserie présente, par comparaison avec l'aile (5) une résistance plus faible dans la direction orientée transversalement à la direction de marche prévue.

5. Structure avant selon l'une des revendications précédentes, **caractérisée en ce que** la liaison de l'aile (5) avec la pièce (6) de carrosserie comporte une pièce en tôle (7) fixée aux composants contigus.
